# EUROPÄISCHE PATENTSCHRIFT

(11) **EP 4 408 662 B1**
(45) Veröffentlichungstag und Bekanntmachung des Hinweises auf die Patenterteilung: **22.10.2025**
(21) Anmeldenummer: 22768867.8
(22) Anmeldetag: 12.09.2022
(51) Int. Cl.: B32B 17/10, B32B 3/08, H01B 7/08

(54) **ANSCHLUSSANORDNUNG MIT VERBUNDSCHEIBE UND FLACHBANDKABEL**
CONNECTION ASSEMBLY WITH LAMINATED GLASS AND RIBBON CABLE
DISPOSITIF DE CONNEXION AVEC VERRE FEUILLETÉ ET CÂBLE PLAT

(30) Priorität: 29.09.2021 EP 21199650
(43) Veröffentlichungstag der Anmeldung: 07.08.2024
(73) Patentinhaber: Saint-Gobain Sekurit France, 60150 Thourotte (FR)
(72) Erfinder: REUL, Bernhard, 52134 Herzogenrath (DE); HERMANGE, Francois, 52134 Herzogenrath (DE); RASTEGAR, Hadi, 52134 Herzogenrath (DE)
(74) Vertreter: Gebauer, Dieter Edmund
(86) Internationale Anmeldenummer: PCT/EP2022/075200
(87) Internationale Veröffentlichungsnummer: WO 2023/052099

(56) Entgegenhaltungen:
- WO-A1-2020/064158

## Beschreibung

Die Erfindung betrifft eine Anschlussanordnung mit einer Verbundscheibe und einem Flachbandkabel, sowie ein Verfahren zu deren Herstellung und deren Verwendung.

Verglasungen in Gebäuden und Fahrzeugen werden zunehmend mit großflächigen, elektrisch leitfähigen und für sichtbares Licht transparenten Funktionsschichten versehen. Insbesondere werden aus Gründen der Energieeinsparung und des Komforts an Verglasungen hohe Anforderungen bezüglich ihrer wärmeisolierenden Eigenschaften gestellt. So ist es wünschenswert, einen hohen Wärmeeintrag durch Sonnenstrahlung zu vermeiden, was zu einem übermäßigen Aufheizen des Innenraums führt und wiederum hohe Energiekosten für die notwendige Klimatisierung zur Folge hat. Abhilfe schaffen Schichtensysteme, bei denen die Lichtdurchlässigkeit und damit der Wärmeeintrag aufgrund Sonnenlichts durch Anlegen einer elektrischen Spannung gesteuert werden kann. Elektrochrome Schichtensysteme sind beispielsweise aus EP 0867752 A1, US 2007/0097481 A1 und US 2008/0169185 A1 bekannt. Derartige Schichtensysteme werden üblicherweise durch externe Schalter geschaltet, die sich im Umfeld der Verglasung befinden. Eine andere Funktion elektrischer Funktionsschichten zielt darauf ab, das Sichtfeld einer Fahrzeugscheibe frei von Eis und Beschlag zu halten. Bekannt sind elektrische Heizschichten (siehe z.B. WO 2010/043598 A1), die durch Anlegen einer elektrischen Spannung eine gezielte Erwärmung der Scheibe bewirken. Die Spannung, die an der elektrischen Heizschicht anliegt, wird in aller Regel durch externe Schalter gesteuert, die bei Fahrzeugen beispielsweise in einem Armaturenbrett integriert sind. Beispielsweise aus DE 10106125 A1, DE 10319606 A1, EP 0720249 A2, US 2003/0112190 A1 und DE 19843338 C2 ist bekannt, eine elektrische Funktionsschicht als Flächenantenne einzusetzen. Dazu wird die Funktionsschicht mit einer Koppelelektrode galvanisch oder kapazitiv gekoppelt und das Antennensignal im Randbereich der Scheibe zur Verfügung gestellt. Das von der Flächenantenne ausgekoppelte Antennensignal wird einem Antennenverstärker zugeführt, der in Kraftfahrzeugen mit der metallischen Karosserie verbunden ist, wodurch ein hochfrequenztechnisch wirksames Bezugspotenzial für das Antennensignal vorgegeben wird.

Solche Verbundscheiben bestehen in der Regel aus mindestens zwei starren Einzelglasscheiben, die durch eine oder mehrere thermoplastische Zwischen- oder Klebeschicht flächigadhäsiv miteinander verbunden sind. Die elektrische Funktionsschicht befindet sich zwischen den Einzelglasscheiben und ist typischer Weise über einen Flachleiter mit der äußeren Umgebung elektrisch verbunden. Der Grund hierfür ist, dass geeignete Flachleiter in aller Regel eine Gesamtdicke von maximal 0,3 mm aufweisen. Derart dünne Flachleiter können ohne Schwierigkeiten zwischen den Einzelglasscheiben in der thermoplastischen Klebeschicht eingebettet werden. Beispiele für Flachleiter zur Kontaktierung von elektrischen Funktionsschichten in Verbundscheiben im Fahrzeugbereich finden sich in DE 42 35 063 A1, DE 20 2004 019 286 U1, WO 2020/064158 A1 oder DE 93 13 394 U1.

Bekannt ist auch die Verwendung von Flachleitern bei Verbundscheiben mit elektrooptischen Komponenten. Hierbei handelt es sich um flächenhafte Strukturen mit elektrisch regelbaren optischen Eigenschaften einer aktiven Schicht. Das heißt, die optischen Eigenschaften der aktiven Schicht und insbesondere deren Transparenz, Streuverhalten oder Leuchtkraft sind durch eine elektrische Spannung steuerbar. Beispiele für elektrooptische Komponenten sind SPD-Elemente (SPD = Suspended Particle Device), die beispielsweise aus EP 0876608 B1 und WO 2011033313 A1 bekannt sind, und PDLC-Elemente (PDLC = Polymer Dispersed Liquid Crystal), die beispielsweise aus DE 102008026339 A1 bekannt sind.

Die elektrische Kontaktierung von elektrischen Funktionsschichten und elektrooptischen Komponenten erfolgt üblicherweise an Sammelleitern ("Busbars"), die im Randbereich der Funktionsschicht bzw. der elektrooptischen Komponente aufgebracht sind und diese elektrisch leitend kontaktieren. Durch Verbinden der Sammelleiter mit einer externen Spannungsquelle, typischer Weise über an den Sammelleitern angebrachte Flachleiter, wird eine Spannung angelegt und die Funktionsschicht bzw. elektrooptische Komponente geschaltet.

In der Praxis werden für komplexere Steueraufgaben Flachbandkabel eingesetzt, die mit einer Mehrzahl elektrischer Leiterbahnen versehen sind. Die elektrischen Leiterbahnen sind sehr dünn mit Dicken beispielsweise im Bereich von 0,03 mm bis 0,1 mm und bestehen beispielsweise aus Kupfer, das sich bewährt hat, da es eine gute elektrische Leitfähigkeit sowie eine gute Verarbeitbarkeit besitzt und die Materialkosten gleichzeitig niedrig sind.

In der Regel wird vom Scheibenhersteller eine Verbundscheibe mit einem Anschlussbereich zum Anschluss an eine weitere Steuerungselektrik gefordert. Die Herstellung solcher Verbundscheiben erfolgt oft für eine Vielzahl von Kunden und/oder eine Vielzahl von Anwendungen, wobei der Anschlussbereich an die jeweilige Anwendung und die spezifischen Bedürfnisse des Kunden angepasst sein muss. Dies bringt einen hohen Aufwand in der kundenspezifischen und/oder anwendungsspezifischen Anpassung mit sich, was ressourcenaufwendig und damit teuer ist. Dies betrifft vor allem den Anschlussbereich für die elektrische Kontaktierung des Flachbandkabels im Außenbereich der Verbundscheibe, die anwendungs- und kundenspezifisch zu gestalten ist. Ferner ist es häufig wünschenswert, das Flachbandkabel mit einem weiteren Anschlusskabel, vorzugsweise ein Rundkabel, elektrisch zu verbinden, da Rundkabel viel günstiger als Flachbandkabel sind und zudem deren Handhabung gegenüber Flachbandkabel erleichtert ist, wobei auch größere Strecken durch das Rundkabel problemlos zu überbrücken sind.

Demgegenüber besteht die Aufgabe der vorliegenden Erfindung darin, eine verbesserte Anschlussanordnung mit einer Verbundscheibe und einem ein elektrisches Funktionselement der Verbundscheibe elektrisch kontaktierendes Flachbandkabel bereitzustellen, das eine flexible elektrische Kontaktierung des Flachbandkabels außerhalb der Verbundscheibe ermöglicht, aber dennoch kostengünstig, einfach in der Handhabung ist und sich gut einlaminieren lässt.

Diese und weitere Aufgaben werden nach dem Vorschlag der Erfindung durch eine Anschlussanordnung mit einer Verbundscheibe und einem Flachbandkabel gemäß dem unabhängigen Patentanspruch gelöst. Bevorzugte Ausführungsformen gehen aus den Unteransprüchen hervor. Ein Verfahren zur Herstellung der Anschlussanordnung und der Verwendung gehen aus den nebengeordneten Patentansprüchen hervor.

Die Erfindung betrifft eine Anschlussanordnung, mindestens umfassend:
- eine Verbundscheibe aus einer ersten Scheibe und einer zweiten Scheibe, die über mindestens eine thermoplastische Zwischenschicht flächenmäßig miteinander verbunden sind,
- ein elektrisches Funktionselement zwischen den beiden Scheiben,
- ein Flachbandkabel mit elektrischen Leiterbahnen, wobei das Flachbandkabel an einem ersten Ende einen ersten Anschlussbereich und an einem zweiten Ende einen zweiten Anschlussbereich aufweist, wobei der erste Anschlussbereich zwischen den beiden Scheiben angeordnet und der zweite Anschlussbereich zwischen den beiden Scheiben aus der Verbundscheibe herausgeführt ist, und wobei die elektrischen Leiterbahnen im ersten Anschlussbereich das elektrische Funktionselement elektrisch kontaktieren, und
wobei mindestens zwei der elektrischen Leiterbahnen innerhalb des Flachbandkabels in mindestens zwei, bevorzugt in genau zwei oder genau drei oder genau vier, Ebenen übereinander angeordnet sind.

Die erfindungsgemäße Anschlussanordnung umfasst also eine Verbundscheibe aus einer ersten Scheibe und einer zweiten Scheibe, die über eine thermoplastische Zwischenschicht flächenmäßig fest miteinander verbunden sind.

Die Anschlussanordnung umfasst weiterhin ein elektrisches Funktionselement, das zwischen den beiden Scheiben angeordnet ist, sowie ein Flachbandkabel, das der elektrischen Kontaktierung des elektrischen Funktionselements dient und insbesondere im Anschlussbereich der Verbundscheibe zum elektrischen Anschluss des Funktionselements an eine Steuerungselektrik dient. Das Flachbandkabel weist einen ersten Anschlussbereich und einen zweiten Anschlussbereich auf, wobei sich entlang einer Erstreckungsrichtung des Flachbandkabels der erste Anschlussbereich an einem ersten Ende und der zweite Anschlussbereich an einem zweiten Ende des Flachbandkabels befinden. Das Flachbandkabel ist in die Verbundscheibe teilweise einlaminiert, wobei sich das erste Ende mit dem ersten Anschlussbereich zwischen den beiden Scheiben befindet und das zweite Ende mit dem zweiten Anschlussbereich zwischen den beiden Scheiben aus der Verbundscheibe herausgeführt ist. Hierbei stehen die elektrischen Leiterbahnen im ersten Anschlussbereich mit dem elektrischen Funktionselement in elektrischen Kontakt und sind mit diesen bevorzugt galvanisch verbunden.

Allgemein ist das Flachbandkabel ein flächiger Körper mit zwei gegenüberliegenden Seiten, der wahlweise in eine ebene oder gekrümmte Form gebracht werden kann. Das Flachbandkabel ist generell länglich ausgebildet und weist entlang seiner Erstreckungsrichtung zwei Enden auf. Des Weiteren ist das Flachbankkabel erheblich länger und breiter als dick ausgebildet.

Das erfindungsgemäße Flachbandkabel umfasst mindestens zwei elektrische Leiterbahnen, wobei die mindestens zwei elektrischen Leiterbahnen innerhalb des Flachbandkabels in mindestens zwei, bevorzugt in genau zwei oder genau drei oder genau vier, Ebenen übereinander angeordnet sind. "Übereinander" bedeutet hier bezüglich der Erstreckungsebene des Flachbandkabels, d.h. bezüglich der Ebene die durch die zwei größeren Dimensionen (Länge und Breite) des Flachbandkabels aufgespannt werden. Vorteilhafterweise sind jeweils mindestens zwei Leiterbahnen in der Projektion orthogonal zur Erstreckungsebene deckungsgleich angeordnet. Alternativ kann auch die Leiterbahn in einer Ebene größer ausgebildet sein und im Wesentlichen die Ebene innerhalb des Flachbandkabels, bevorzugt abzüglich eines isolierenden Randbereichs, teilweise oder vollständig einnehmen. Dadurch wird die Stromtragfähigkeit dieser Leiterbahn erhöht oder eine Abschirmung erzielt.

In einer vorteilhaften Ausgestaltung eines erfindungsgemäßen Flachbandkabels ist mindestens eine elektrische Leiterbahn auf einer ersten Oberfläche einer elektrisch isolierenden Trägerfolie und mindestens eine weitere Leiterbahn auf der zweiten Oberfläche (d.h. der der ersten Oberfläche bezüglich der Trägerfolie gegenüberliegenden Oberfläche) der Trägerfolie angeordnet.

In einer weiteren vorteilhaften Ausgestaltung eines erfindungsgemäßen Flachbandkabels sind die elektrische Leiterbahnen mit der ersten bzw. zweiten Oberfläche der Trägerfolie fest verbunden ist, bevorzugt über eine Klebefläche. Alternativ kann die Trägerfolie mit den elektrischen Leiterbahnen beschichtet sein, insbesondere durch ein Druckverfahren, beispielsweise ein Siebdruckverfahren.

In einer weiteren vorteilhaften Ausgestaltung eines erfindungsgemäßen Flachbandkabels weist das Flachbandkabel zwischen den Leiterbahnen einer Ebene, isolierende Bereiche, bevorzugt bestehend aus Abschnitten einer Isolationsfolie, auf. Vorteilhafterweise sind auch am Rand des Flachbandleiters jeweils Abschnitte einer Isolationsfolie angeordnet.

In einer weiteren vorteilhaften Ausgestaltung eines erfindungsgemäßen Flachbandkabels weisen die Leiterbahnen an ihren der Trägerfolie abgewandten Flächen mindestens eine elektrisch isolierende Deckfolie auf.

In einer weiteren vorteilhaften Ausgestaltung sind die Leiterbahnen bzw. die Abschnitte einer Isolationsfolie mit der Deckfolie fest verbunden, beispielsweise über Klebeflächen. Die Trägerfolie und die Deckfolie formen gemeinsam eine Isolationshülle, welche die elektrischen Leiterbahnen umhüllt.

Die Breite des Flachbandkabels kann konstant sein oder variieren. Insbesondere kann das Flachbandkabel im ersten Anschlussbereich und/oder zweiten Anschlussbereich verbreitert sein.

In einer weiteren vorteilhaften Ausgestaltung eines erfindungsgemäßen Flachbandkabels beträgt die maximale Breite bF des Flachbandkabels, bevorzugt innerhalb der Verbundscheibe und/oder an der Austrittsstelle aus der Verbundscheibe, von 6 mm bis 40 mm, bevorzugt von 20 mm bis 40 mm und insbesondere von 25 mm bis 30 mm. In einer weiteren vorteilhaften Ausgestaltung eines erfindungsgemäßen Flachbandkabels beträgt die maximale Dicke dF des Flachbandkabels, bevorzugt innerhalb der Verbundscheibe und/oder an der Austrittsstelle aus der Verbundscheibe, von 150 µm bis 600 µm, bevorzugt von 300 µm bis 400 µm und insbesondere von 300 µm bis 350 µm. Flachbandkabel mit derartigen maximalen Dimensionen, insbesondere innerhalb der Verbundscheibe und/oder an der Austrittsstelle aus der Verbundscheibe, lassen sich besonders gut einlamineren oder die Stabilität der Verbundscheibe zu beeinträchtigen oder deren optisches Erscheinungsbild zu stören. Dabei ist der Bereich an der Austrittstelle von besonderer Bedeutung, da dort bei größeren Dimensionen des Flachbanckabels besonders häufig Dichtungs- und Versiegelungsprobleme auftreten.

In einer vorteilhaften Ausgestaltung des Flachbandkabels weist dieses eine Länge von 5 cm bis 150 cm, bevorzugt von 10 cm bis 100 cm und insbesondere von 50 cm bis 90 cm auf. Es versteht sich, dass die Länge, Breite und Dicke des Flachbandkabels an die Anforderungen des jeweiligen Einzelfalls angepasst werden können. Die Richtung der Länge definiert die Erstreckungsrichtung des Flachbandkabels.

Die Trägerfolie, die Deckfolie und/oder die Isolationsfolie enthalten bevorzugt Polyimid oder Polyesther, besonders bevorzugt Polyethylenterephtalat (PET) oder Polyethylennapthalat(PEN) oder besteht daraus. Die Deckfolie und/oder die Isolationsfolie können auch aus einem elektrisch isolierenden Lack, bevorzugt einem Polymerlack, bestehen. Die Deckfolie und/oder die Isolationsfolie können auch thermoplastische Kunststoffe und Elastomere wie Polyamid, Polyoxymethylen, Polybutylenterephthalat oder Ethylen-Propylen-Dien-Kautschuk enthalten oder daraus bestehen. Alternativ können Vergusswerkstoffe wie Acrylat- oder Epoxidharzsysteme als Deckfolie und/oder Isolationsfolie verwendet werden. Die Trägerfolien, Deckfolien oder Isolationsfolien können transparent oder gefärbt sein, beispielsweise schwarz oder weiß.

Die Trägerfolie, die Deckfolie und/oder die Isolationsfolie weisen bevorzugt eine Dicke von 10 µm bis 300 µm, besonders bevorzugt von 25 µm bis 200 µm und insbesondere von 60 µm bis 150 µm auf. Die Trägerfolie, die Deckfolie und/oder die Isolationsfolie sind beispielsweise über eine Klebstoffschicht mit den Leiterbahnen verklebt. Die Dicke der Klebstoffschicht beträgt beispielsweise von 10 µm bis 150 µm und besonders bevorzugt von 50 µm bis 75 µm. Derartige Trägerfolien, Deckfolien und/oder Isolationsfolien sind besonders dazu geeignet, die Leiterbahnen elektrisch zu isolieren und mechanisch zu stabilisieren sowie vor mechanischen Beschädigungen und Korrosion zu schützen.

Die elektrischen Leiterbahnen des Flachbandkabels enthalten oder bestehen vorzugsweise aus einem metallischen Material, beispielsweise Kupfer, Aluminium, Edelstahl, Zinn, Gold, Silber oder Legierungen hieraus. Werden die elektrischen Leiterbahnen als Streifen aus einer Metallfolie hergestellt, kann das Metall abschnittsweise oder vollständig verzinnt sein. Dies ist besonders vorteilhaft um eine gute Lötbarkeit bei gleichzeitigem Korrosionsschutz zu erzielen. Zudem wird die Kontaktierung mit einem elektrisch leitfähigen Klebstoff verbessert.

Gemäß einer weiteren vorteilhaften Ausgestaltung weisen die elektrischen Leiterbahnen eine Dicke dL von 10 µm bis 150 µm, bevorzugt von 30 µm bis 150 µm und insbesondere von 50 µm bis 150 µm auf. Derart dünne Leiter sind besonders flexibel und können beispielsweise gut in Verbundscheiben einlaminiert und aus diesen herausgeführt werden. Gemäß einer weiteren vorteilhaften Ausgestaltung weisen die elektrischen Leiterbahnen eine Breite bL von 0,05 mm bis 40 mm, bevorzugt von 1 mm bis 20 mm und insbesondere von 2 mm bis 5 mm auf. Derartige Breiten sind besonders geeignet, um in Verbindung mit den oben genannten Dicken eine ausreichende Stromtragefähigkeit zu erzielen.

Derartig dimensionierte Flachbandkabel sind derart dünn, dass sie ohne Schwierigkeiten zwischen den einzelnen Scheiben in der thermoplastischen Zwischenschicht einer Verbundscheibe eingebettet und aus dieser herausgeführt werden können. Das Flachbandkabel eignet sich somit besonders zur Kontaktierung von elektrischen Funktionselementen in Verbundscheiben.

Jede elektrische Leiterbahn kann an zwei entlang der Leiterbahn voneinander beabstandeten Kontaktstellen elektrisch kontaktiert werden. Die Kontaktstellen sind Bereiche der Leiterbahnen, an denen eine elektrische Kontaktierung möglich ist. In der einfachsten Ausgestaltung handelt es sich hierbei um zugängliche Bereiche der elektrischen Leiterbahnen. Der erste Anschlussbereich weist eine Kontaktstelle mindestens einer der elektrischen Leiterbahnen auf. Der zweite Anschlussbereich befindet sich typischer Weise, jedoch nicht zwingend, auf derselben Seite bezüglich der Erstreckungsebene des Flachbandkabels wie der erste Anschlussbereich. Der mindestens eine zweite Anschlussbereich weist eine Kontaktstelle mindestens einer der elektrischen Leiterbahnen auf. Die Anschlussbereiche des Flachbandkabels dienen zum elektrischen Kontaktieren der Leiterbahnen, zu welchem Zweck eine etwaige Deckfolie und ggf. Isolationsfolie oder Trägerfolie zumindest an den Kontaktstellen nicht vorhanden oder entfernt ist, so dass die Leiterbahnen zugänglich sind. Alternativ kann das Flachbandkabel geeignete elektrische Durchführungen, sogenannt Vias aufweisen.

Es versteht sich, dass die Anschlussbereiche durch eine elektrisch leitfähige Beschichtung, wie eine Verzinnung, oder eine elektrisch nicht leitfähige Schicht, wie ein Lötlack, vor Korrosion geschützt sein können. Diese Schutzschicht wird üblicherweise erst bei der elektrischen Kontaktierung entfernt, verbrannt oder anderweitig durchdrungen, um einen elektrischen Kontakt zu ermöglichen. Isolationsfreie Anschlussbereiche lassen sich durch Fenstertechniken bei der Herstellung oder durch nachträgliches Entfernen, beispielsweise durch Laserablation oder mechanisches Abtragen, herstellen. Bei der Fenstertechnik werden die Leiterbahnen auf eine Trägerfolie durch eine Deckfolie mit entsprechenden Ausnehmungen (Fenstern) in den Anschlussbereichen beschichtet, beispielsweise beklebt oder laminiert. Alternativ werden die Leiterbahnen beidseitig laminiert, wobei eine Deckfolie entsprechende Ausnehmungen in den Anschlussbereichen aufweist. Beim nachträglichen Entfernen können entsprechende Ausnehmungen in den Anschlussbereichen in die Deckfolie eingebracht werden, wenn die Leiterbahnen auf eine Trägerfolie aufgebracht wurden. Bei laminierten Flachbandkabeln können Ausnehmungen in den Anschlussbereichen in eine Deckfolie und ggf. die Trägerfolie eingebracht werden. Möglich ist jedoch auch, dass das Flachbandkabel im ersten Anschlussbereich und im zweiten Anschlussbereich jeweils eine oder mehrere Durchbrechungen der Deckfolie und ggf. der Trägerfolie aufweist. Jede Durchbrechung erstreckt sich dabei vollständig auf die Leiterbahn, d.h. sie bildet einen materialfreien Durchgang auf die Leiterbahn.

Die Anschlussbereiche sind ihrer jeweiligen Verwendung nach ausgebildet. In einer vorteilhaften Ausgestaltung sind die Kontaktstellen als Lötkontaktstellen ausgebildet. Die elektrische Leitungsverbindung zwischen den Anschlussbereichen des Flachbandkabels und dem elektrischen Funktionselement sowie dem mindestens einen Verbindungsbereich erfolgt vorzugsweise durch Löten, Bonden, Schweißen, Klemmen, Quetschen oder Stecken. Beim Löten wird ein Weichlöten mit einem niedrigschmelzenden Lot bevorzugt. Besonders bevorzugt sind dabei bleifreie Lote. Alternativ kann die elektrisch leitfähige Verbindung durch Kleben mit einem elektrisch leitfähigen Kleber oder Klemmen erfolgen, beispielsweise mittels einer metallischen Klammer, Hülse oder Steckverbindung. Im Inneren der Verbundscheibe kann die elektrische Leitungsverbindung auch durch eine unmittelbare Berührung der elektrisch leitfähigen Bereiche erfolgen, wobei diese Anordnung fest in der Verbundscheibe einlaminiert ist und dadurch gegen Verrutschen gesichert ist.

Vorteilhaft ist das Flachbandkabel im ersten oder zweiten Anschlussbereich mit einem Elektrodenfeld versehen, das eine Vielzahl von Einzelelektroden umfasst, die mit den Leiterbahnen elektrisch verbunden sind. Dies ermöglicht eine einfache elektrische Kontaktierung des elektrischen Funktionselements zu dessen spezifischen Steuerung/Regelung.

In einer vorteilhaften Ausgestaltung einer erfindungsgemäßen Anschlussanordnung umfasst das Flachbandkabel im zweiten Anschlussbereich ein oder bevorzugt mehrere elektrische Verbindungsbereiche, in denen das Flachbandkabel mit einem Anschlusskabel lösbar oder fest verbunden ist.

Vorteilhafterweise sind im Verbindungsbereich die Leiterbahnen am zweiten Anschlussbereich mit elektrischen Adern eines oder mehrerer Anschlusskabel, insbesondere Rundkabel, elektrisch verbunden. Besonders bevorzugt sind die Leiterbahnen und die Adern durch Lötverbindungen, Quetschverbindungen, Klemmverbindungen oder Steckverbindungen elektrisch miteinander verbunden. Der Verbindungsbereich kann optional in einem Gehäuse angeordnet sein und/oder durch eine Vergussmasse versiegelt, die den Verbindungsbereich beispielsweise vor Korrosion schützt.

Die Anschlusskabel können wiederum an ihren, dem Verbindungsbereich abgewandten Ende, elektrisch Verbindungsmittel, wie Stecker oder Buchsen aufweisen, die die Anschlussanordnung mit einer Boardelektronik oder anderen Steuer- und Auswerteeinheiten verbindbar macht.

In einer weiteren vorteilhaften Ausgestaltung kann der Verbindungsbereich oder die elektrischen Verbindungsmittel von einem oder mehreren Schutzgehäusen umgeben sein. Das oder die Schutzgehäuse erhöhen die mechanische Stabilität der Verbindungsbereiche bzw. der Verbindungsmittel, insbesondere bei der Fertigung der Anschlussanordnung und reduzieren so den Ausschuss an fehlerhaften Artikeln, was wiederum einer Kostenersparnis entspricht. Dabei wird das mindestens eine Schutzgehäuse derart angeordnet, dass es über dem einen oder den mehreren Verbindungsbereichen oder Verbindungsmitteln zu liegen kommt und vorzugsweise der äußeren Form der Verbindungsbereiche oder Verbindungsmittel nachgebildet ist. Somit ist es möglich, eine formschlüssige Umhausung des Verbindungsbereichs oder des Verbindungsmittels zu erreichen.

Das mindestens eine Schutzgehäuse dient zum mechanischen Schutz des Verbindungsbereichs oder Verbindungsmittels und ist vorteilhafterweise derart ausgebildet, dass es etwaigen Verformungen des Verbindungsbereichs bzw. Verbindungsmittels bei der Herstellung der Anschlussanordnung, insbesondere beim Laminieren der Verbundscheiben unter Vakuum und bei hohen Temperaturen, entgegenwirkt. Dabei kann das Schutzgehäuse aus einem entsprechend festen Kunststoff, beispielsweise Polyimid (PI) oder PA66 in Verbindung mit Glasfasern, bestehen. Besonders vorteilhaft besteht das mindestens eine Schutzgehäuse zu diesem Zweck aus einem Material, das härter ist, als das Material, aus dem die Verbindungsbereiche und -mittel bestehen. Die Materialhärtebestimmung erfolgt dabei nach den bekannten gängigen Methoden, etwa gemäß ISO 14577, wie sie zum Zeitpunkt der Anmeldung, bzw. zum Prioritätszeitpunkt Anwendung fand.

Das Schutzgehäuse kann beispielsweise im Spritzguss- oder 3D-Druckverfahren hergestellt sein. Beispielsweise kann das Schutzgehäuse mit dem einen oder den mehreren Verbindungsbereichen oder Verbindungsmitteln verklebt werden. Möglich ist aber auch eine gemeinsame Herstellung mit dem einen oder den mehreren Verbindungsbereichen oder Verbindungsmitteln, beispielsweise im Spritzgussverfahren.

Die erfindungsgemäße Anschlussanordnung umfasst eine Verbundscheibe mit einem elektrischen Funktionselement, das im Innern der Verbundscheibe angeordnet ist. Bei dem elektrischen Funktionselement kann es sich um eine beliebige elektrische Struktur handeln, die eine elektrische Funktion erfüllt und einer Steuerung/Regelung durch eine externe Steuerungselektrik bedarf, so dass der Einsatz eines Flachbandkabels mit einer Mehrzahl von Leiterbahnen technisch sinnvoll ist.

Vorzugsweise handelt es sich bei dem elektrischen Funktionselement um eine vorteilhaft großflächige, elektrisch leitfähige und vorteilhaft für sichtbares Licht transparente Schicht (elektrische Funktionsschicht), so wie sie eingangs beschrieben wurde. Die elektrische Funktionsschicht oder eine Trägerfolie mit der elektrischen Funktionsschicht kann auf einer Oberfläche einer Einzelscheibe angeordnet sein. Beispielsweise befindet sich die elektrische Funktionsschicht auf einer innenliegenden Oberfläche der ersten und/oder der zweiten Scheibe. Alternativ kann die elektrische Funktionsschicht zwischen zwei thermoplastischen Folien der Zwischenschicht eingebettet sein. Die elektrische Funktionsschicht ist dann bevorzugt auf einer Trägerfolie oder Trägerscheibe aufgebracht. Die Trägerfolie oder Trägerscheibe enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

Die elektrische Funktionsschicht ist vorzugsweise auf einer Oberfläche mindestens einer Scheibe angeordnet und bedeckt bzw. überdeckt die Oberfläche der Scheibe teilweise, jedoch vorzugsweise großflächig. Der Ausdruck "großflächig" bedeutet, dass mindestens 50%, mindestens 60%, mindestens 70%, mindestens 75% oder bevorzugt mindestens 90% der Oberfläche der Scheibe von der Funktionsschicht bedeckt ist. Die Funktionsschicht kann sich aber auch über kleinere Anteile der Oberfläche der Scheibe erstrecken. Die Funktionsschicht ist vorzugsweise transparent für sichtbares Licht. In einer vorteilhaften Ausgestaltung ist die Funktionsschicht eine Einzelschicht oder ein Schichtaufbau aus mehreren Einzelschichten mit einer Gesamtdicke von kleiner oder gleich 2 µm, besonders bevorzugt kleiner oder gleich 1 µm.

Im Sinne vorliegender Erfindung bedeutet "transparent", dass die Gesamttransmission der Verglasung den gesetzlichen Bestimmungen für Windschutzscheiben und vordere Seitenscheiben entspricht und für sichtbares Licht bevorzugt eine Durchlässigkeit von mehr als 70% und insbesondere von mehr als 75% aufweist. Für hintere Seitenscheiben, Dachscheiben und Heckscheiben kann "transparent" auch 10% bis 70% Lichttransmission bedeuten. Entsprechend bedeutet "opak" eine Lichttransmission von weniger als 15%, vorzugsweise weniger als 5%, insbesondere 0%.

Beispielsweise enthält die elektrische Funktionsschicht mindestens ein Metall, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, SnO2:F) oder Antimon-dotiertes Zinnoxid (ATO, SnO2:Sb). Transparente, elektrisch leitfähige Schichten sind beispielsweise aus DE 20 2008 017 611 U1 und EP 0 847 965 B1 bekannt. Sie bestehen beispielsweise aus einer Metallschicht wie einer Silberschicht oder einer Schicht aus einer silberhaltigen Metalllegierung. Typische Silberschichten weisen bevorzugt Dicken von 5 nm bis 15 nm auf, besonders bevorzugt von 8 nm bis 12 nm. Die Metallschicht kann zwischen mindestens zwei Schichten aus dielektrischem Material vom Typ Metalloxid eingebettet sein. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid, Aluminiumnitrid sowie Kombinationen von einem oder mehreren davon enthalten. Der Schichtaufbau wird im Allgemeinen durch eine Folge von Abscheidevorgängen erhalten, die durch ein Vakuumverfahren wie die magnetfeldgestützte Kathodenzerstäubung oder durch chemische Gasphasenabscheidung (CVD) durchgeführt werden. Auf beiden Seiten der Silberschicht können auch sehr feine Metallschichten vorgesehen sein, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Transparente, elektrische Funktionsschichten haben bevorzugt einen Flächenwiderstand von 0,1 Ohm/Quadrat bis 200 Ohm/Quadrat, besonders bevorzugt von 1 Ohm/Quadrat bis 50 Ohm/Quadrat und ganz besonders bevorzugt von 1 Ohm/Quadrat bis 10 Ohm/Quadrat.

Vorzugsweise ist die elektrische Funktionsschicht eine elektrisch beheizbare Schicht, durch welche die Verbundscheibe mit einer Heizfunktion versehen wird. Solche beheizbaren Schichten sind dem Fachmann an sich bekannt. Sie enthalten typischerweise eine oder mehrere, beispielsweise zwei, drei oder vier elektrisch leitfähige Schichten. Diese Schichten enthalten oder bestehen bevorzugt aus zumindest einem Metall, beispielsweise Silber, Gold, Kupfer, Nickel und/oder Chrom, oder einer Metalllegierung und enthalten bevorzugt mindestens 90 Gew. % des Metalls, insbesondere mindestens 99,9 Gew. % des Metalls. Solche Schichten weisen eine besonders vorteilhafte elektrische Leitfähigkeit bei gleichzeitiger hoher Transmission im sichtbaren Spektralbereich auf. Die Dicke einer Einzelschicht beträgt bevorzugt von 5 nm bis 50 nm, besonders bevorzugt von 8 nm bis 25 nm. Bei einer solchen Dicke wird eine vorteilhaft hohe Transmission im sichtbaren Spektralbereich und eine besonders vorteilhafte elektrische Leitfähigkeit erreicht.

Bei dem elektrischen Funktionselement kann es sich gleichermaßen bevorzugt um eine elektrooptische Komponente handeln, wie beispielsweise ein SPD-Element, ein PDLC-Element oder ein elektrochromes EC-Element, wie sie eingangs beschrieben wurden. Diese sind dem Fachmann an sich bekannt, so dass sie nicht näher erläutert werden müssen. Die elektrische Funktionsschicht kann auch eine polymere elektrisch leitfähige Schicht sein, beispielsweise enthaltend zumindest ein konjugiertes Polymer oder ein mit leitfähigen Partikeln versehenes Polymer.

Elektrooptische Komponenten, wie SPD- oder PDLC-Elemente, sind als Mehrschichtfolien kommerziell erhältlich, wobei die aktive Schicht zwischen zwei Flächenelektroden angeordnet ist, die zum Anlegen einer Spannung zur Steuerung der aktiven Schicht dienen. In aller Regel sind die beiden Flächenelektroden zwischen zwei Trägerfolien, typischerweise aus PET, angeordnet. Kommerziell erhältliche Mehrschichtfolien werden zudem beidseitig mit einer Schutzfolie aus Polypropylen oder Polyethylen abgedeckt, welche dazu dienen, die Trägerfolien vor Verschmutzungen oder Verkratzungen zu schützen. Bei der Herstellung der Verbundscheibe wird das elektrooptische Bauteil in der gewünschten Größe und Form aus der Mehrschichtfolie ausgeschnitten und zwischen die Folien einer Zwischenschicht eingelegt, mittels derer zwei Glasscheiben miteinander zur Verbundscheibe laminiert werden. Eine typische Anwendung sind Windschutzscheiben mit elektrisch regelbaren Sonnenblenden, welche beispielsweise aus DE 102013001334 A1, DE 102005049081 B3, DE 102005007427 A1 und DE 102007027296 A1 bekannt sind.

In der erfindungsgemäßen Anschlussanordnung ist das elektrische Funktionselement vorteilhaft mit mindestens zwei Sammelleitern elektrisch verbunden, durch die ein Strom eingespeist werden kann. Die Sammelleiter sind bevorzugt im Randbereich des elektrischen Funktionselements angeordnet. Die Länge des Sammelleiters ist typischerweise im Wesentlichen gleich der Länge der jeweiligen Seitenkante des elektrischen Funktionselements, kann aber auch etwas größer oder kleiner sein. Vorzugsweise sind zwei Sammelleiter angeordnet, im Randbereich entlang zweier gegenüberliegenden Seitenkanten des Funktionselements. Die Breite des Sammelleiters beträgt bevorzugt von 2 mm bis 30 mm, besonders bevorzugt von 4 mm bis 20 mm. Die Sammelleiter sind typischer Weise jeweils in Form eines Streifens ausgebildet, wobei die längere seiner Dimensionen als Länge und die weniger lange seiner Dimensionen als Breite bezeichnet wird. Solche Sammelleiter sind beispielsweise als aufgedruckte und eingebrannte leitfähige Struktur ausgebildet. Der aufgedruckte Sammelleiter enthält zumindest ein Metall, bevorzugt Silber. Die elektrische Leitfähigkeit wird bevorzugt über Metallpartikel, enthalten im Sammelleiter, besonders bevorzugt über Silberpartikel, realisiert. Die Metallpartikel können sich in einer organischen und/oder anorganischen Matrix wie Pasten oder Tinten befinden, bevorzugt als gebrannte Siebdruckpaste mit Glasfritten. Die Schichtdicke des aufgedruckten Sammelleiters beträgt bevorzugt von 5 µm bis 40 µm, besonders bevorzugt von 8 µm bis 20 µm und ganz besonders bevorzugt von 10 µm bis 15 µm. Aufgedruckte Sammelleiter mit diesen Dicken sind technisch einfach zu realisieren und weisen eine vorteilhafte Stromtragfähigkeit auf. Alternativ kann der Sammelleiter aber auch als Streifen einer elektrisch leitfähigen Folie ausgebildet sein. Der Sammelleiter enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

Die Verbundscheibe der erfindungsgemäßen Anschlussanordnung umfasst eine erste Scheibe und eine zweite Scheibe, die bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar oder auch getönt oder gefärbt sein. Sofern die Verbundscheibe als Windschutzscheibe verwendet wird, sollte diese im zentralen Sichtbereich eine ausreichende Lichttransmission aufweisen, bevorzugt mindestens 70 % im Haupt-Durchsichtbereich A gemäß ECE-R43. Die erste Scheibe und die zweite Scheibe können auch als Außen- und Innenscheibe bezeichnet werden.

Die erste Scheibe, die zweite Scheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Dicke der ersten Scheibe und der zweiten Scheibe kann breit variieren und so den Erfordernissen im Einzelfall angepasst werden. Die erste Scheibe und die zweite Scheibe weisen vorteilhaft Standardstärken von 0,7 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, auf. Die Größe der Scheiben kann breit variieren und richtet sich nach der Größe der erfindungsgemäßen Verwendung. Die erste und die zweite Scheibe weisen beispielsweise im Fahrzeugbau und Architekturbereich übliche Flächen von 200 cm² bis zu 20 m² auf.

Ein weiterer Aspekt der Erfindung umfasst ein Verfahren zur Herstellung einer erfindungsgemäßen Anschlussanordnung mit den folgenden Schritten:
a) Bereitstellen eines Flachbandkabels mit elektrischen Leiterbahnen, wobei das Flachbandkabel an einem ersten Ende einen ersten Anschlussbereich und an einem zweiten Ende einen zweiten Anschlussbereich aufweist,
b) Elektrisch leitendes Verbinden der Leiterbahnen des Flachbandkabels im ersten Anschlussbereich mit einem elektrischen Funktionselement,
c) Anordnen des Flachbandkabels zwischen zwei Scheiben derart, dass sich der erste Anschlussbereich zwischen den beiden Scheiben befindet und der zweite Anschlussbereich zwischen den beiden Scheiben herausgeführt ist,
d) Laminieren der beiden Scheiben über eine thermoplastische Zwischenschicht nach den Schritten a), b) und c).

Die Schritte a), b) und c) können in einer beliebigen Reihenfolge durchgeführt werden.

Gemäß einer Ausgestaltung des erfindungsgemäßen Verfahrens wird vor oder nach dem Laminieren der beiden Scheiben, ein elektrischer Verbindungsbereich, bevorzugt durch Lötverbindungen, Quetschverbindungen, Klemmverbindungen oder Steckverbindungen, zwischen dem zweiten Anschlussbereich des Flachbandkabels und einem Anschlusskabel, insbesondere einem Rundkabel, ausgebildet.

Das Verbinden der beiden Einzelscheiben beim Laminieren erfolgt bevorzugt unter Einwirkung von Hitze, Vakuum und/oder Druck. Es können an sich bekannte Verfahren zur Herstellung einer Verbundscheibe verwendet werden. Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die Erfindung erstreckt sich weiterhin auf die Verwendung der erfindungsgemäßen Anschlussanordnung als Gebäudeverglasung oder Fahrzeugverglasung, bevorzugt als Fahrzeugverglasung, insbesondere als Windschutzscheibe oder Dachscheibe eines Kraftfahrzeugs.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nachfolgend anhand von Ausführungsbeispielen näher erläutert, wobei Bezug auf die beigefügten Figuren genommen wird. Gleiche bzw. gleichwirkende Elemente sind mit dem gleichen Bezugszeichen versehen. Es zeigen in vereinfachter, nicht maßstabsgetreuer Darstellung:
- Figur 1: eine schematische Draufsicht auf eine Verbundscheibe einer erfindungsgemäßen Anschlussanordnung,
- Figur 2: einen Ausschnitt der Anschlussanordnung von Figur 1 in einer Detailansicht,
- Figur 3: einen Ausschnitt der Anschlussanordnung von Figur 1 in einer Detailansicht auf eine Seitenfläche der Verbundscheibe, und
- Figur 4: eine schematische Querschnittsdarstellung eines erfindungsgemäßen Flachbandkabels.

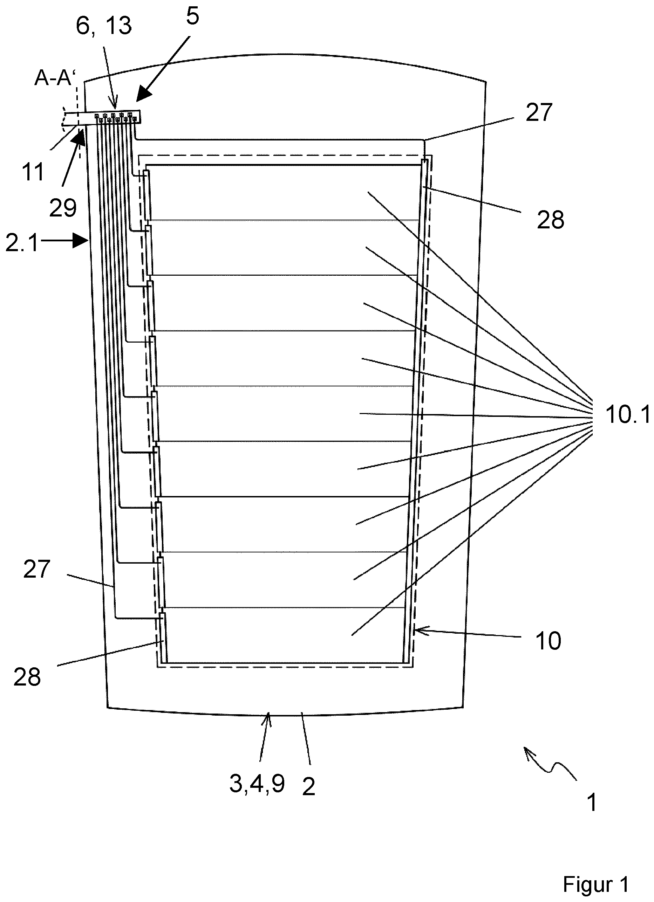

Es wird zunächst Bezug auf die Figur 1 bis 3 genommen, worin eine insgesamt mit der Bezugszahl 1 bezeichnete Anschlussanordnung in schematischer Weise veranschaulicht ist.

Figur 1 zeigt dabei eine Draufsicht durch eine insgesamt mit der Bezugszahl 2 bezeichneten Verbundscheibe in einer Durchsicht durch die zweite Scheibe 4 der Verbundscheibe 2.

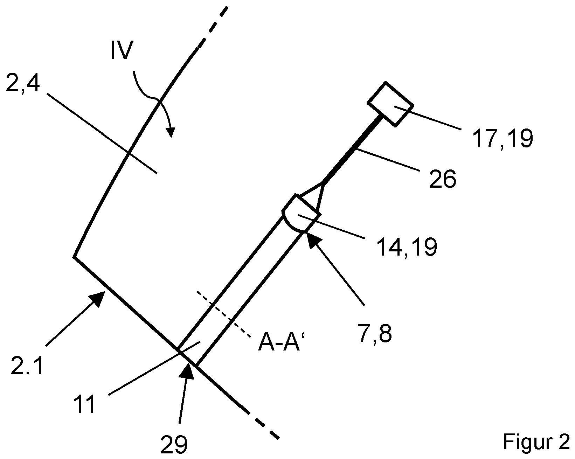

Figur 2 zeigt einen Ausschnitt der Verbundscheibe 2 in einer Draufsicht auf den Bereich, in dem das insgesamt mit dem Bezugszeichen 11 bezeichnete erfindungsgemäße Flachbandkabel aus der Seitenfläche 2.1 der Verbundscheibe 2 herausgeführt ist.

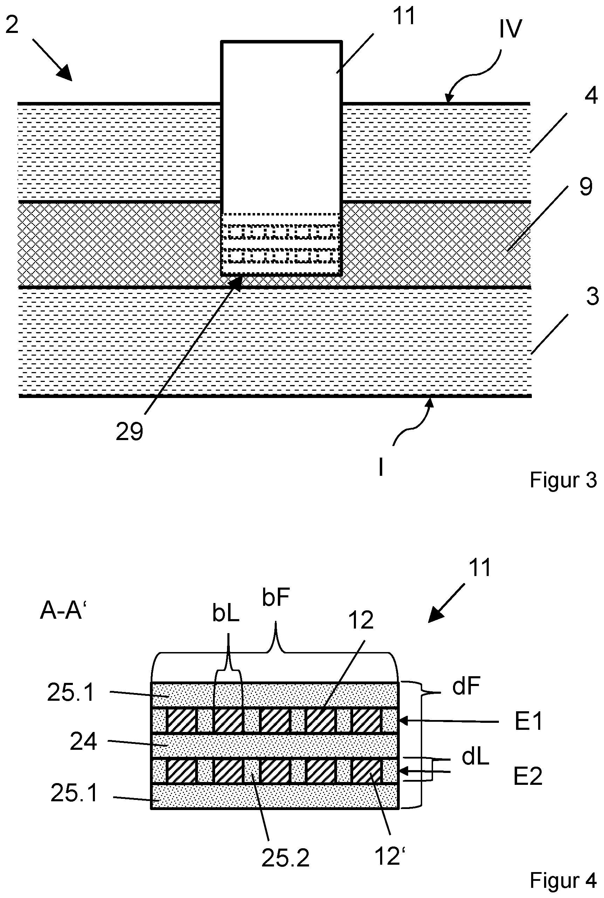

Figur 3 zeigt einen Ausschnitt der Anschlussanordnung 1 der Figuren 1 und 2 in einer Detailansicht auf die Seitenfläche 2.1 an der Stelle, an der das Flachbandkabel 11 aus der Verbundscheibe 2 herausgeführt ist.

Die Anschlussanordnung 1 umfasst eine Verbundscheibe 2, die hier beispielsweise als Dachscheibe eines Kraftfahrzeugs ausgebildet ist. Wie in Figur 3 schematisch dargestellt ist, umfasst die Verbundscheibe 2 eine erste Scheibe 3, die als Außenscheibe dient, und eine zweite Scheibe 4 als Innenscheibe. Die Innenscheibe ist dabei die bei der späteren Verwendung zum Fahrzeuginnenraum gerichtete Scheibe, während die Außenscheibe zur Fahrzeugumgebung weist. Die der Fahrzeugumgebung zugewandte Oberfläche der Außenscheibe (erste Scheibe 3) wird, wie in der Fahrzeugverglasungstechnik üblich, als Oberfläche I bezeichnet und die dem Fahrzeuginnenraum zugewandte Oberfläche der Innenscheibe (zweite Scheibe 4) wird als Oberfläche IV bezeichnet. Die beiden Scheiben 3, 4 bestehen beispielsweise aus Kalk-Natron-Glas. Die beiden Scheiben 3, 4 sind durch mindestens eine thermoplastische Zwischenschicht 9 beispielsweise aus Polyvinylbutyral (PVB), Ethylen-Vinyl-Acetat (EVA) oder Polyurethan (PU) fest miteinander verbunden.

Die Verbundscheibe 2 ist mit einem gleichermaßen lediglich schematisch dargestellten elektrischen Funktionselement 10 versehen, das sich zwischen den beiden Scheiben 3, 4 befindet. Das elektrische Funktionselement 10 ist hier beispielsweise ein PDLC-Element, das beispielsweise als elektrisch regelbarer Sonnen- oder Sichtschutz dient. Das PDLC-Element ist durch eine kommerziell erhältliche PDLC-Mehrschichtfolie gebildet, die in die Zwischenschicht 9 eingelagert ist. Die Zwischenschicht 9 umfasst zu diesem Zweck beispielsweise insgesamt drei thermoplastische Folien (hier nicht im Detail dargestellt) mit einer Dicke von beispielsweise 0,38 mm aus PVB, wobei eine erste thermoplastische Folie mit der ersten Scheibe 3 verbunden ist, und eine zweite thermoplastische Folie mit der zweiten Scheibe 4 verbunden ist, und wobei eine dazwischenliegende thermoplastische Rahmenfolie einen Ausschnitt aufweist, in welchen das zugeschnittene Funktionselement 10 passgenau eingelegt ist. Die dritte thermoplastische Folie bildet also gleichsam eine Art Passepartout für das Funktionselement 10, welches somit rundum in thermoplastisches Material eingekapselt und dadurch geschützt ist. Diese Einbettung des PDLC-Elements in eine Verbundscheibe 2 ist dem Fachmann wohlbekannt, so dass sich eine genaue Darstellung erübrigt. Wie dem Fachmann weiterhin bekannt ist, umfasst das PDLC-Element in aller Regel eine aktive Schicht zwischen zwei Flächenelektroden und zwei Trägerfolien. Die aktive Schicht enthält eine Polymermatrix mit darin dispergierten Flüssigkristallen, die sich in Abhängigkeit der an die Flächenelektroden angelegten elektrischen Spannung S ausrichten, wodurch die optischen Eigenschaften geregelt werden können.

Das Funktionselement 10 ist hier beispielsweise durch Isolierungslinien in neun Segmente 10.1 unterteilt. Die Segmente 10.1 sind streifenartig ausgebildet. Die Isolierungslinien zwischen den Segmenten 10.1 weisen beispielsweise eine Breite von 40 µm (Mikrometer) bis 50 µm auf. Sie können beispielsweise mittels eines Lasers in die vorgefertigte Mehrschichtfolie eingebracht sein.

Die Isolierungslinien trennen insbesondere die Flächenelektroden des Funktionselements 10 in voneinander isolierte Streifen, die jeweils über einen separaten elektrischen Anschluss verfügen. So sind die Segmente 10.1 unabhängig voneinander schaltbar.

Die jeweiligen Flächenelektroden der Segmente 10.1 sind auf der einen Seite jeweils einzeln über Abschnitte von Sammelleitern 28 (in Figur 1 links dargestellt) und auf der gegenüberliegenden Seite über einen gemeinsamen Sammelleiter 28 (in Figur 1 rechts dargestellt) kontaktiert. Zum Anlegen einer Spannung an die jeweils einzelnen Sammelleiterabschnitte der neun Segmente 10.1 und dem einen gemeinsamen Sammelleiter 28 werden somit hier beispielsweise zehn unabhängige elektrische Leitungsverbindungen benötigt.

Die Verbundscheibe 1 weist weiterhin ein Flachbandkabel 11 auf. Die Sammelleiter 28 der Segmente 10.1 des Funktionselements 10 sind hier beispielsweise jeweils über elektrische Leiterdrähte 27 mit dem Flachbandkabel 11 elektrisch leitend verbunden. Eine sichere elektrisch leitende Verbindung wird dabei bevorzugt durch Verlöten der Verbindung erzielt.

Das Funktionselement 10 ist ein PDLC-Funktionselement, das als ein regelbarer Sonnen- oder Sichtschutz fungiert. Der Fahrer oder ein anderer Fahrzeuginsasse kann beispielsweise abhängig vom Sonnenstand das PDLC-Funktionselement beispielsweise über ein Touch-Bedienelement (hier nicht dargestellt) bedienen.

Zur Ansteuerung der neun unabhängigen Segmenten 10.1 mit einem gemeinsamen Gegenpol weist das Flachbandkabel 11 beispielsweise zehn voneinander elektrisch isolierte elektrische Leiterbahnen auf.

Figur 4 zeigt den schematischen Querschnitt eines beispielhaften Flachbandkabels 11 mit zehn voneinander elektrisch isolierten Leiterbahnen 12. Dabei sind jeweils fünf Leiterbahnen 12,12' in zwei verschiedenen Ebenen E1, E2 übereinander angeordnet. Dazu sind fünf Leiterbahnen 12 mit einer ersten (oberen) Oberfläche einer Trägerfolie 24 und fünf weitere Leiterbahnen 12' mit einer zweiten (unteren) Oberfläche einer Trägerfolie 24 verbunden und beispielsweise über hier nicht dargestellte Klebeflächen mit der Trägerfolie 24 verklebt.

Die elektrischen Leiterbahnen 12 haben beispielsweise jeweils eine Dicke dL von 75 µm und eine Breite bL von 3 mm und bestehen beispielsweise aus einer Kupfer-Folie oder aus verzinntem Kupfer.

Des Weiteren weist das Flachbandkabel 11 zwei elektrisch isolierende Deckfolien 25.1 auf, die auf der Oberseite (erste, obere Oberfläche) und auf der Unterseite (zweite, untere Oberfläche) der Trägerfolie 24 angeordnet sind und die Leiterbahnen 12,12' zwischen Trägerfolie 24 und Deckfolie 25.1 einschließen. Dadurch werden die Leiterbahnen 12,12' vor mechanischer Beschädigung, Kurzschlüssen und Korrosion geschützt.

Im dargestellten Beispiel sind weiterhin Abschnitte einer elektrisch isolierenden Isolationsfolie 25.2 zwischen den Leiterbahnen 12,12' der jeweiligen Ebene E1, E2 und an den Randbereichen nach außen angeordnet. Die Isolationsfolie 25.2 ist beispielsweise durch hier nicht dargestellte Klebeverbindungen mit der Trägerfolie 24 und den Deckfolien 25.1 fest verbunden.

Das gesamte Flachbandkabel 11 weist beispielsweise an der Austrittsstelle 29 aus der Verbundscheibe 2 heraus eine maximale Breite bF von 26 mm und eine maximale Dicke dF von 315 µm auf. Ein derartige breites und dickes Flachbandkabel 11 lässt sich noch gut und sicher in die Verbundscheibe 2 einlaminieren.

Es versteht sich, dass das Flachbandkabel 11 den jeweiligen Gegebenheiten der tatsächlichen Verwendung angepasst werden kann und beispielsweise Leiterbahnen auf drei oder vier Ebenen aufweisen kann. Alternativ oder in Kombination können mehr oder weniger Leiterbahnen pro Ebene nebeneinander angeordnet werden.

Wie in der schematischen Einsetzung von Figur 2 veranschaulicht, ist das Flachbandkabel 11 teilweise in die Verbundscheibe 2 einlaminiert und zwischen den beiden Scheiben 3, 4 aus der Verbundscheibe 2 herausgeführt. In der Figur 2 ist das Flachbandkabel 11 um die Seitenfläche 2.1 der zweiten Scheibe 4 herumgeführt und auf der Oberfläche IV der zweiten Scheibe 4 angeordnet. Dazu kann die zweite Scheibe 4 im Austrittsbereich eine Ausnehmung aufweisen, beispielsweise durch einen angeschliffenen Bereich (hier nicht dargestellt).

Das Flachbandkabel 11 weist einen ersten Anschlussbereich 6 und einen zweiten Anschlussbereich 8 auf, wobei sich entlang einer Erstreckungsrichtung des Flachbandkabels 11 der erste Anschlussbereich 6 an einem ersten Ende 5 und der zweite Anschlussbereich 8 an einem zweiten Ende 7 des Flachbandkabels 11 befinden. Das Flachbandkabel 11 weist im ersten Anschlussbereich 6 ein Elektrodenfeld 13 mit zehn Elektroden zur elektrischen (z.B. galvanischen) Kontaktierung des Funktionselements 10 auf. Zur Kontaktierung der Leiterbahnen 12' der unteren Ebene E2 kann das Flachbandkabel 11 Ausnehmungen in der Trägerfolie 24 oder Durchkontaktierungen (sogenannte Vias) aufweisen.

Das Flachbandkabel 11 weist an seinem zweiten Ende 7 einen zweiten Anschlussbereich 8 auf. Dieser ist über ein Verbindungselement 14 mit beispielsweise einem Rundkabel 26 derart verbunden, dass die einzelnen Leiterbahnen 12, 12' mit jeweils einzelnen Adern des Rundkabels 26 elektrisch kontaktiert sind. Am dem dem Verbindungselement 14 abgewandten Ende des Rundkabels 26 kann beispielsweise ein Anschlusselement 17, beispielsweise ein Stecker oder eine Buchse zur weiteren elektrischen Verbindung, beispielsweise mit einer Boardelektronik eines Fahrzeugs, angeordnet sein.

Das Verbindungselement 14 und/oder das Anschlusselement 17 können beispielsweise jeweils innerhalb eines Schutzgehäuses 19 angeordnet sein, die das Verbindungselement 14 und/oder das Anschlusselement 17 vor mechanischer Beschädigung während des Laminiervorgangs schützen.

Aus obigen Ausführungen ergibt sich, dass die erfindungsgemäße Anschlussanordnung in vorteilhafter Weise eine flexible, kostengünstige und einfache elektrische Verbindung des Flachbandkabels mit einer elektrischen Einrichtung außerhalb der Verbundscheibe, wie eine Steuerungselektrik für die Steuerung/Regelung des elektrischen Funktionselements der Verbundscheibe, ermöglicht. Besonders vorteilhaft ist die einfache und flexible Anpassung der Anzahl und Dimensionierung der notwendigen Leiterbahnen an die jeweiligen Anforderungen und die gute Laminierbarkeit der Verbundscheibe.

### Bezugszeichenliste

- 1: Anschlussanordnung
- 2: Verbundscheibe
- 2.1: Seiten- oder Austrittsfläche
- 3: erste Scheibe
- 4: zweite Scheibe
- 5: erstes Ende
- 6: erster Anschlussbereich
- 7: zweites Ende
- 8: zweiter Anschlussbereich
- 9: Zwischenschicht
- 10: elektrisches Funktionselement
- 10.1: Segmente
- 11: Flachbandkabel
- 12: Leiterbahn
- 14: Verbindungsbereich
- 17: Buchse oder Stecker
- 19: Schutzgehäuse
- 24: Trägerfolie
- 25.1: Deckfolie
- 25.2: Isolationsfolie
- 26: Rundkabel
- 27: Leiterdraht
- 28: Sammelleiter
- 29: Austrittsstelle
- bF: (maximale) Breite des Flachbandkabels 11
- bL: (maximale) Breite der Leiterbahn 12
- dF: (maximale) Dicke des Flachbandkabels 11
- dL: (maximale) Dicke der Leiterbahn 12
- E1: Ebene 1
- E2: Ebene 2

## Patentansprüche

1. Anschlussanordnung (1), umfassend:
- eine Verbundscheibe (2) aus einer ersten Scheibe (3) und einer zweiten Scheibe (4), die über mindestens eine thermoplastische Zwischenschicht (9) flächenmäßig miteinander verbunden sind,
- ein elektrisches Funktionselement (10) zwischen den beiden Scheiben (3, 4),
- ein Flachbandkabel (11) mit elektrischen Leiterbahnen (12,12'), wobei das Flachbandkabel (11) an einem ersten Ende (5) einen ersten Anschlussbereich (6) und an einem zweiten Ende (7) einen zweiten Anschlussbereich (8) aufweist, wobei der erste Anschlussbereich (6) zwischen den beiden Scheiben (3, 4) angeordnet und der zweite Anschlussbereich (8) zwischen den beiden Scheiben (3, 4) aus der Verbundscheibe (2) herausgeführt ist, und wobei die elektrischen Leiterbahnen (12) im ersten Anschlussbereich (6) das elektrische Funktionselement (10) elektrisch kontaktieren,
wobei mindestens zwei der elektrischen Leiterbahnen (12) innerhalb des Flachbandkabels (11) in mindestens zwei, bevorzugt in genau zwei oder genau drei oder genau vier, Ebenen (E1, E2) übereinander angeordnet sind.

2. Anschlussanordnung (1) nach Anspruch 1, wobei mindestens eine elektrische Leiterbahn (12) auf einer ersten Oberfläche einer elektrisch isolierenden Trägerfolie (24) und mindestens eine weitere Leiterbahn (12') auf der zweiten Oberfläche der Trägerfolie (24) angeordnet ist.

3. Anschlussanordnung (1) nach Anspruch 2, wobei die elektrische Leiterbahn (12,12') mit der ersten beziehungsweise mit der zweiten Oberfläche der Trägerfolie (24) fest verbunden ist, bevorzugt über eine Klebefläche.

4. Anschlussanordnung (1) nach einem der Ansprüche 1 bis 3, wobei das Flachbandkabel (11) zwischen den Leiterbahnen (12,12') einer Ebene (E1, E2), isolierende Bereiche, bevorzugt bestehend aus einer Isolationsfolie (25.2), aufweist.

5. Anschlussanordnung (1) nach einem der Ansprüche 2 bis 4, wobei die Leiterbahnen (12,12') an ihren der Trägerfolie (24) abgewandten Oberflächen mindestens eine elektrisch isolierende Deckfolie (25.1) aufweisen und bevorzugt mit der Deckfolie (25.1) fest verbunden sind, beispielsweise über eine Klebefläche.

6. Anschlussanordnung (1) nach einem der Ansprüche 1 bis 5, wobei die maximale Breite bF des Flachbandkabels (11), bevorzugt innerhalb der Verbundscheibe (2) und/oder an der Austrittsstelle (29) aus der Verbundscheibe (2), von 6 mm bis 40 mm, bevorzugt von 20 mm bis 40 mm und insbesondere von 25 mm bis 30 mm, beträgt.

7. Anschlussanordnung (1) nach einem der Ansprüche 1 bis 6, wobei die maximale Dicke dF des Flachbandkabels (11), bevorzugt innerhalb der Verbundscheibe (2) und/oder an der Austrittsstelle (29) aus der Verbundscheibe (2), von 150 µm bis 600 µm, bevorzugt von 300 µm bis 400 µm und insbesondere von 300 µm bis 350 µm, beträgt.

8. Anschlussanordnung (1) nach einem der Ansprüche 1 bis 7, wobei die Breite bL jeder Leiterbahn (12,12'), bevorzugt innerhalb der Verbundscheibe (2) und/oder an der Austrittsstelle (29) aus der Verbundscheibe (2), von 0,05 mm bis 40 mm, bevorzugt von 1 mm bis 20 mm und insbesondere von 2 mm bis 5 mm, beträgt.

9. Anschlussanordnung (1) nach einem der Ansprüche 1 bis 8, wobei die Dicke dL jeder Leiterbahn (12,12'), bevorzugt innerhalb der Verbundscheibe (2) und/oder an der Austrittsstelle (29) aus der Verbundscheibe (2), von 10 µm bis 150 µm, bevorzugt von 30 µm bis 150 µm und insbesondere von 50 µm bis 150 µm, beträgt.

10. Anschlussanordnung (1) nach einem der Ansprüche 1 bis 9, wobei in mindestens einem, bevorzugt in genau einem, Verbindungsbereich (14) die Leiterbahnen (12,12') am zweiten Anschlussbereich (8) mit elektrischen Adern eines oder mehrerer Anschlusskabel (16), insbesondere eines oder mehrerer Rundkabel (26), elektrisch verbunden sind.

11. Anschlussanordnung (1) nach Anspruch 10, wobei die Leiterbahnen (12,12') und die Adern durch Lötverbindungen, Quetschverbindungen, Klemmverbindungen oder Steckverbindungen elektrisch verbunden sind.

12. Anschlussanordnung (1) nach Anspruch 10 oder Anspruch 11, bei welcher das oder die Verbindungsbereiche (14) von mindestens einem Schutzgehäuse (19) umgeben sind.

13. Verfahren zur Herstellung einer Anschlussanordnung (1) nach einem der Ansprüche 1 bis 12, mit den folgenden Schritten:
a) Bereitstellen eines Flachbandkabels (1) mit elektrischen Leiterbahnen (12,12'), wobei das Flachbandkabel (11) an einem ersten Ende (5) einen ersten Anschlussbereich (6) und an einem zweiten Ende (7) einen zweiten Anschlussbereich (8) aufweist,
b) Elektrisch leitendes Verbinden der Leiterbahnen (12,12') des Flachbandkabels (11) im ersten Anschlussbereich (6) mit einem elektrischen Funktionselement (10),
c) Anordnen des Flachbandkabels (11) zwischen zwei Scheiben (3, 4) derart, dass sich der erste Anschlussbereich (6) zwischen den beiden Scheiben (3, 4) befindet und der zweite Anschlussbereich (8) zwischen den beiden Scheiben (3, 4) herausgeführt ist,
d) Laminieren der beiden Scheiben (3, 4) über mindestens eine thermoplastische Zwischenschicht (9) nach den Schritten a), b) und c).

14. Verfahren nach Anspruch 13, welches den folgenden Schritt aufweist:
vor oder nach dem Laminieren der beiden Scheiben (3,4), Ausbilden eines elektrischen Verbindungsbereichs (14) durch Lötverbindungen, Quetschverbindungen, Klemmverbindungen oder Steckverbindungen zwischen dem zweiten Anschlussbereich (8) des Flachbandkabels (11) und einem Anschlusskabel (16), insbesondere einem Rundkabel (26).

15. Verwendung der Anschlussanordnung (1) nach einem der Ansprüche 1 bis 12 als Gebäudeverglasung oder Fahrzeugverglasung, bevorzugt als Fahrzeugverglasung, insbesondere als Windschutzscheibe oder Dachscheibe eines Kraftfahrzeugs.

## Claims

1. A connection assembly (1) comprising:
- a laminated pane (2) formed of a first pane (3) and a second pane (4), which are areally connected to one another via at least one thermoplastic intermediate layer (9),
- an electrical functional element (10) between the two panes (3, 4),
- a ribbon cable (11) with electrical conductor tracks (12, 12'), wherein the ribbon cable (11) has a first connection region (6) at a first end (5) and a second connection region (8) at a second end (7), wherein the first connection region (6) is arranged between the two panes (3, 4) and the second connection region (8) is guided out of the laminated pane (2) between the two panes (3, 4), and wherein the electrical conductor tracks (12) electrically contact the electrical functional element (10) in the first connection region (6),
wherein at least two of the electrical conductor tracks (12) within the ribbon cable (11) are arranged one above the other in at least two, preferably in exactly two or exactly three or exactly four, planes (E1, E2).

2. The connection assembly (1) according to claim 1, wherein at least one electrical conductor track (12) is arranged on a first surface of an electrically insulating carrier film (24) and at least one further conductor track (12') is arranged on the second surface of the carrier film (24).

3. The connection assembly (1) according to claim 2, wherein the electrical conductor track (12, 12') is fixedly connected to the first or to the second surface of the carrier film (24), preferably via an adhesive surface.

4. The connection assembly (1) according to any one of claims 1 to 3, wherein the ribbon cable (11) has insulating regions, preferably consisting of an insulating film (25.2), between the conductor tracks (12, 12') of a plane (E1, E2).

5. The connection assembly (1) according to any one of claims 2 to 4, wherein the conductor tracks (12, 12') have at least one electrically insulating cover film (25.1) on their surfaces facing away from the carrier film (24) and are preferably fixedly connected to the cover film (25.1), for example via an adhesive surface.

6. The connection assembly (1) according to any one of claims 1 to 5, wherein the maximum width bF of the ribbon cable (11), preferably within the laminated pane (2) and/or at the exit point (29) from the laminated pane (2), is from 6 mm to 40 mm, preferably from 20 mm to 40 mm, and in particular from 25 mm to 30 mm.

7. The connection assembly (1) according to any one of claims 1 to 6, wherein the maximum thickness dF of the ribbon cable (11), preferably within the laminated pane (2) and/or at the exit point (29) from the laminated pane (2), is from 150 µm to 600 µm, preferably from 300 µm to 400 µm, and in particular from 300 µm to 350 µm.

8. The connection assembly (1) according to any one of claims 1 to 7, wherein the width bL of each conductor track (12, 12'), preferably within the laminated pane (2) and/or at the exit point (29) from the laminated pane (2), is from 0.05 mm to 40 mm, preferably from 1 mm to 20 mm, and in particular from 2 mm to 5 mm.

9. The connection assembly (1) according to any one of claims 1 to 8, wherein the thickness dL of each conductor track (12, 12'), preferably within the laminated pane (2) and/or at the exit point (29) from the laminated pane (2), is from 10 µm to 150 µm, preferably from 30 µm to 150 µm, and in particular from 50 µm to 150 µm.

10. The connection assembly (1) according to any one of claims 1 to 9, wherein, in at least one, preferably in exactly one connection region (14), the conductor tracks (12, 12') are electrically connected to electrical cores of one or more connection cables (16), in particular one or more round cables (26), at the second connection region (8).

11. The connection assembly (1) according to claim 10, wherein the conductor tracks (12, 12') and the cores are electrically connected by solder connections, crimp connections, clamping connections, or plug connections.

12. The connection assembly (1) according to claim 10 or claim 11, in which the one or more connection regions (14) are surrounded by at least one protective housing (19).

13. A method for producing a connection assembly (1) according to any one of claims 1 to 12, having the following steps:
a) providing a ribbon cable (1) with electrical conductor tracks (12, 12'), wherein the ribbon cable (11) has a first connection region (6) at a first end (5) and a second connection region (8) at a second end (7),
b) electrically conductively connecting the conductor tracks (12, 12') of the ribbon cable (11) in the first connection region (6) to an electrical functional element (10),
c) arranging the ribbon cable (11) between two panes (3, 4) in such a way that the first connection region (6) is located between the two panes (3, 4) and the second connection region (8) is guided out between the two panes (3, 4),
d) laminating the two panes (3, 4) via at least one thermoplastic intermediate layer (9) after steps a), b) and c).

14. The method according to claim 13, having the following step:
before or after the lamination of the two panes (3, 4), forming an electrical connection region (14) by soldering connections, crimp connections, clamping connections or plug connections between the second connection region (8) of the ribbon cable (11) and a connection cable (16), in particular a round cable (26).

15. A use of the connection assembly (1) according to any one of claims 1 to 12 as a building glazing or vehicle glazing, preferably as a vehicle glazing, in particular as a windshield or roof panel of a motor vehicle.

## Revendications

1. Ensemble de connexion (1) comprenant:
- une vitre feuilletée (2) formée d'une première vitre (3) et d'une deuxième vitre (4), qui sont reliées entre elles sur toute leur surface par au moins une couche intermédiaire thermoplastique (9),
- un élément fonctionnel électrique (10) entre les deux vitres (3, 4),
- un câble ruban (11) avec des pistes conductrices électriques (12, 12'), le câble ruban (11) présentant une première zone de connexion (6) à une première extrémité (5) et une deuxième zone de connexion (8) à une deuxième extrémité (7), la première zone de connexion (6) étant disposée entre les deux vitres (3, 4) et la deuxième zone de connexion (8) est guidée hors de la vitre feuilletée (2) entre les deux vitres (3, 4), et dans lequel les pistes conductrices électriques (12) sont en contact électrique avec l'élément fonctionnel électrique (10) dans la première zone de connexion (6),
au moins deux des pistes conductrices électriques (12) à l'intérieur du câble ruban (11) étant disposées l'une au-dessus de l'autre dans au moins deux, de préférence exactement deux ou exactement trois ou exactement quatre plans (E1, E2).

2. Ensemble de connexion (1) selon la revendication 1, dans lequel au moins une piste conductrice électrique (12) est disposée sur une première surface d'un film support électriquement isolant (24) et au moins une autre piste conductrice (12') est disposée sur la deuxième surface du film support (24).

3. Ensemble de connexion (1) selon la revendication 2, dans lequel la piste conductrice électrique (12, 12') est reliée de manière fixe à la première ou à la deuxième surface du film support (24), de préférence via une surface adhésive.

4. Ensemble de connexion (1) selon l'une quelconque des revendications 1 à 3, dans lequel le câble ruban (11) comporte des zones isolantes, de préférence constituées d'un film isolant (25.2), entre les pistes conductrices (12, 12') d'un plan (E1, E2).

5. Ensemble de connexion (1) selon l'une quelconque des revendications 2 à 4, dans lequel les pistes conductrices (12, 12') comportent au moins un film de recouvrement électriquement isolant (25.1) sur leurs surfaces opposées au film support (24) et sont de préférence reliées de manière fixe au film de recouvrement (25.1), par exemple par l'intermédiaire d'une surface adhésive.

6. Ensemble de connexion (1) selon l'une quelconque des revendications 1 à 5, dans lequel la largeur maximale bF du câble ruban (11), de préférence à l'intérieur de la vitre feuilletée (2) et/ou au point de sortie (29) de la vitre feuilletée (2), est comprise entre 6 mm et 40 mm, de préférence entre 20 mm et 40 mm, et en particulier entre 25 mm et 30 mm.

7. Ensemble de connexion (1) selon l'une quelconque des revendications 1 à 6, dans lequel l'épaisseur maximale dF du câble ruban (11), de préférence à l'intérieur du panneau feuilleté (2) et/ou au point de sortie (29) du panneau feuilleté (2), est comprise entre 150 µm et 600 µm, de préférence entre 300 µm et 400 µm, et en particulier entre 300 µm et 350 µm.

8. Ensemble de connexion (1) selon l'une quelconque des revendications 1 à 7, dans lequel la largeur bL de chaque piste conductrice (12, 12'), de préférence à l'intérieur de la vitre feuilletée (2) et/ou au point de sortie (29) de la vitre feuilletée (2), est comprise entre 0,05 mm et 40 mm, de préférence entre 1 mm et 20 mm, et en particulier entre 2 mm et 5 mm.

9. Ensemble de connexion (1) selon l'une quelconque des revendications 1 à 8, dans lequel l'épaisseur dL de chaque piste conductrice (12, 12'), de préférence à l'intérieur de la vitre feuilletée (2) et/ou au point de sortie (29) de la vitre feuilletée (2), est comprise entre 10 µm et 150 µm, de préférence entre 30 µm et 150 µm, et en particulier entre 50 µm et 150 µm.

10. Ensemble de connexion (1) selon l'une quelconque des revendications 1 à 9, dans lequel, dans au moins une, de préférence exactement une zone de connexion (14), les pistes conductrices (12, 12') sont connectées électriquement à des âmes électriques d'un ou plusieurs câbles de connexion (16), en particulier d'un ou plusieurs câbles ronds (26), au niveau de la deuxième zone de connexion (8).

11. Ensemble de connexion (1) selon la revendication 10, dans lequel les pistes conductrices (12, 12') et les conducteurs sont reliés électriquement par des connexions soudées, serties, serrées ou enfichées.

12. Ensemble de connexion (1) selon la revendication 10 ou la revendication 11, dans lequel la ou les régions de connexion (14) sont entourées par au moins un boîtier de protection (19).

13. Procédé de fabrication d'un ensemble de connexion (1) selon l'une quelconque des revendications 1 à 12, comprenant les étapes suivantes :
a) fournir un câble ruban (1) avec des pistes conductrices électriques (12, 12'), le câble ruban (11) comportant une première zone de connexion (6) à une première extrémité (5) et une deuxième zone de connexion (8) à une deuxième extrémité (7),
b) connecter de manière électriquement conductrice les pistes conductrices (12, 12') du câble ruban (11) dans la première zone de connexion (6) à un élément fonctionnel électrique (10),
c) disposer le câble ruban (11) entre deux vitres (3, 4) de telle sorte que la première zone de connexion (6) se trouve entre les deux vitres (3, 4) et que la deuxième zone de connexion (8) soit guidée vers l'extérieur entre les deux vitres (3, 4),
d) stratifier les deux vitres (3, 4) via au moins une couche intermédiaire thermoplastique (9) après les étapes a), b) et c).

14. Procédé selon la revendication 13, comprenant l'étape suivante :
avant ou après le laminage des deux vitres (3, 4), former une zone de connexion électrique (14) par des connexions soudées, serties, serrées ou enfichées entre la deuxième zone de connexion (8) du câble ruban (11) et un câble de connexion (16), en particulier un câble rond (26).

15. Utilisation de l'ensemble de connexion (1) selon l'une quelconque des revendications 1 à 12 comme vitrage de bâtiment ou vitrage de véhicule, de préférence comme vitrage de véhicule, en particulier comme pare-brise ou panneau de toit d'un véhicule automobile.
